# EUROPEAN PATENT APPLICATION

(11) **EP 2 497 972 A2**
(43) Date of publication of application: **12.09.2012**
(21) Application number: 12158324.9
(22) Date of filing: 06.03.2012
(51) Int. Cl.: F16F 15/315

(54) **Sectioned tuning ring for rotating body**

(30) Priority: 10.03.2011 US 201113044861
(71) Applicant: General Electric Company, Schenectady, NY 12345 (US)
(72) Inventor: Jewett, Jason Winfred, Schenectady, NY New York 12345 (US); Emeterio, Eloy Vincent, Schenectady, NY New York 12345 (US)
(74) Representative: Cleary, Fidelma

(57) **Abstract**

A solution is provided for tuning the frequency of a rotating body (104). A sectioned tuning ring (100) is mounted to a flange coupling (102) that couples a first part (106) and a second part (108) of a rotating body (104) together. The sectioned tuning ring (100) adjusts the frequency of the rotating body (104). The sectioned tuning ring (100) can be bolted on to the rotating body (104) as it is in an operating position within the machine, thus eliminating the need to remove the rotating body (104) from the machine.

## Description

### BACKGROUND OF THE INVENTION

The invention relates generally to rotating body technology. More particularly, the invention relates to a solution for tuning the frequency of a rotating body, i.e., a torsional mode, using a sectioned tuning ring mounted to a flanged coupling of the rotating body.

Rotating bodies, such as rotors, are used in many different types of mechanical and electrical elements, including generators, motors and other similar devices. These rotating bodies have multiple torsional natural frequency modes and for a variety of reasons, including stress, fatigue, performance, etc., it is desirable to keep these frequency modes within certain ranges. For example, turbine rotors, or other mechanical elements including a rotating body, typically have at least one torsional natural frequency mode close to twice a line frequency. If this frequency mode becomes too close to twice a line frequency and becomes excited, it can cause failure of elements in a coupled body, such as the last stage buckets in a coupled turbine.

Currently, the frequency of a rotating body torsional mode can be shifted by changes in either inertia or torsional stiffness that directly impact the frequency of the rotating body mode of interest. The current approach to achieve these modifications is to add or remove large shrunk-on tuning rings axially over the rotor and onto couplings between parts of the rotor. Therefore, the current method for tuning the frequency of a rotating body torsional mode that is operating at or near a torsional natural frequency requires, minimally, decoupling the rotor from the prime mover and exposing the rotor to allow the installation/removal of shrunk-on tuning rings axially over the rotor and onto a coupling that couples parts of the rotor. This process is extremely time consuming and expensive.

In addition, the shrunk-on tuning rings are large, high strength and expensive rings. If this method does not provide a significant enough shift in the torsional natural frequency mode then the rotating body, or components in the coupling, need to be machined to remove stiffness or inertia depending on the scenario. Machining is generally not easily reversible if the modifications do not work because it typically requires an on-site lathe or completely removing the generator from the field and sending it to a service shop for machining. Each of these steps add significant expense to the solution and cause an extension in the outage if extensive work was required.

### BRIEF DESCRIPTION OF THE INVENTION

In a first aspect, the invention provides an apparatus comprising: a sectioned tuning ring mounted to a flange coupling that couples a first part and a second part of a rotating body together, the sectioned tuning ring adjusting a frequency of the rotating body.

In a second aspect, the invention provides a system comprising: a rotating body including a first part coupled to a second part by a flanged coupling; and the apparatus described above.

In a third aspect, the invention provides a method comprising: providing a rotating body including a first part coupled to a second part by a flange coupling; and mounting a sectioned tuning ring to the flange coupling with the rotating body in an operating position within a machine to adjust a frequency of the rotating body.

### BRIEF DESCRIPTION OF THE DRAWINGS

Embodiments of the present invention will now be described, by way of example only, with reference to the accompanying drawings in which:
FIG. 1 shows a perspective view illustrating a sectioned tuning ring coupled to a flange coupling of a rotating body according to embodiments of the invention.
FIG. 2 shows a perspective view illustrating a sectioned tuning ring coupled to a flange coupling of a rotating body according to another embodiment of the invention.
FIG. 3 shows a cross-sectional view of the FIG. 2 embodiment.
FIGS. 4-6 show cross-sectional detail views of various embodiments of mating elements between sections of the sectioned tuning rings in accordance with the different embodiments of the invention.
FIG. 7 shows a perspective view illustrating a sectioned tuning ring coupled to a flange coupling of a rotating body according to another embodiment of the invention.

It is noted that the drawings of the invention are not to scale. The drawings are intended to depict only typical aspects of the invention, and therefore should not be considered as limiting the scope of the invention.

### DETAILED DESCRIPTION OF THE INVENTION

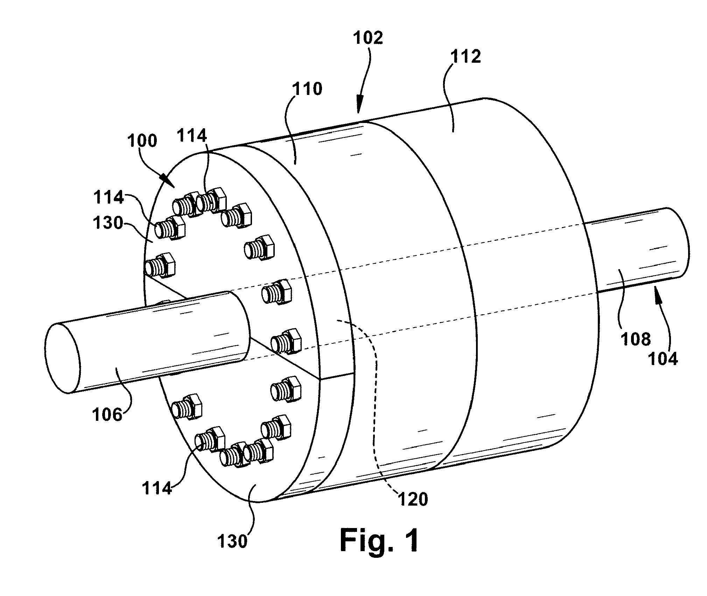

Referring to the drawing, FIG. 1 shows a perspective view illustrating an apparatus including a sectioned tuning ring 100 coupled to a flange coupling 102 of a rotating body 104 according to embodiments of the invention. When sectioned tuning ring 100 is coupled to rotating body 104, it adjusts a frequency of the rotating body from what it would be without it. For example, sectioned tuning ring 100 may adjust a frequency of a torsional mode of rotating body 104 above or below a natural frequency of the torsional mode of the rotating body. Other adjustments may also be possible via sectioned tuning ring 100.

Rotating body 104 may be any form of rotating body within any form of machine. In the most applicable settings, rotating body 104 may include a rotating shaft of, for example, a gas turbine, a steam turbine or a combined gas and steam turbine, or a rotor of an electro-dynamic machine such as a generator. As will become apparent, in the above-described settings, sectioned tuning ring 100 allows installation thereof and tuning of rotating body 104 without removing the rotating body from an operational position within a machine. That is, in contrast to conventional shrunk-on tuning rings, sectioned tuning ring 100 does not require removal of the rotating body so that it can be passed axially along its length to the flange coupling. Consequently, since rotating body 104 may remain in its operating position, tuning thereof does not require as much time and expense. As understood, rotating body 104 can be supported by any known means, e.g., bearings, in the machine. Flange coupling 102 couples a first part 106 and a second part 108 of rotating body 104 together. A first flange 110 is coupled to first part 106 and a second flange 112 is coupled to second part 108. First flange 110 is coupled to second flange 112 by a plurality of bolts 114. Rotating body 104 may extend through flanges 110, 112 or be butt-coupled to the flanges. In either case, the flanges 110, 112 may be coupled to the rotor parts using any now known or later developed technique, e.g., by welding or being integrally formed therewith.

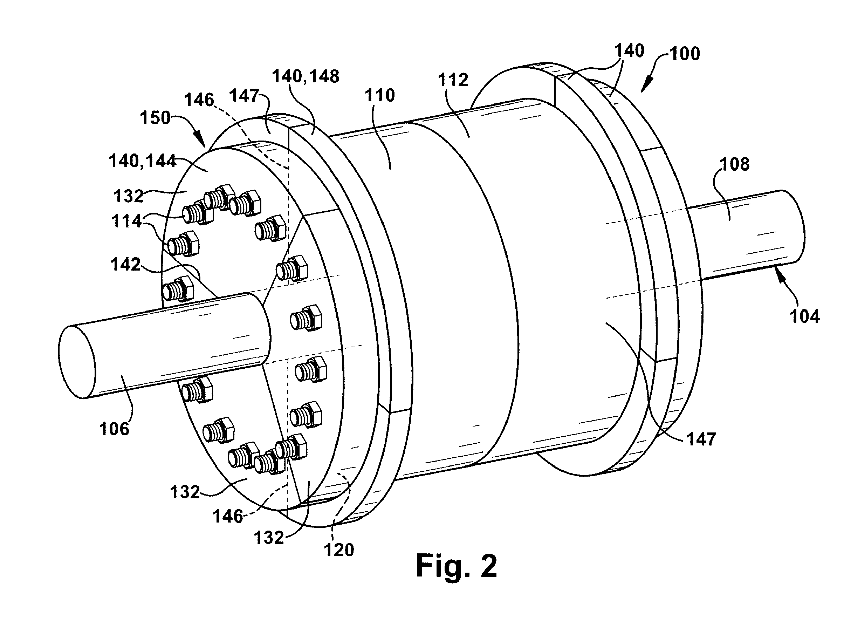

In one embodiment, sectioned tuning ring 100 is mounted to flange coupling 102 using plurality of bolts 114. That is, the same bolts used to couple flanged coupling 102 may be used to mount sectioned tuning ring 100. Bolts 114, which may include ancillary structure such as nuts and/or washers therefor, may be modified compared to conventional bolts to withstand the additional stresses created by sectioned tuning ring 100. For examples, bolts 114 may have: different material; larger or smaller diameter on shaft, head or bolts; different threads (bolts and nuts also); different washers (if used); added seated areas; etc. In another embodiment, a first set of bolts may be used to couple flange coupling 102 and another set of bolts may be used to mount sectioned tuning ring 100 to flanged coupling 102. In this case, the sectioned tuning ring(s) 100 immediately adjacent to flanged coupling 102 may include bolt accommodating openings (not shown) therein such as recesses for nuts. It is understood that this latter embodiment does not look any different than what is shown in FIGS. 2-3.

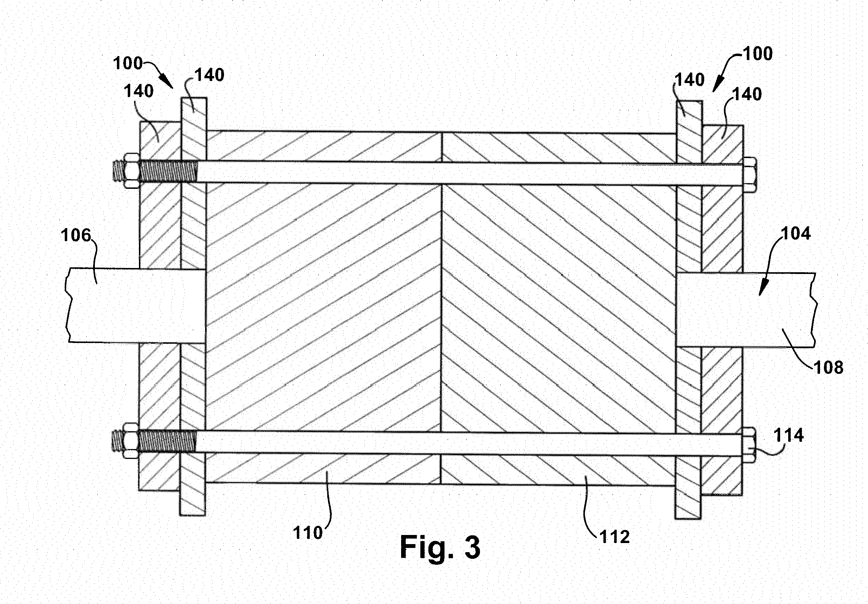

In the FIG. 1 embodiment, a single, sectioned tuning ring 100 is illustrated coupled to an axially facing surface 120 (behind ring 100) of flange coupling 102. However, as shown in FIGS. 2 and 3, in another embodiment, sectioned tuning ring 100 may include a plurality of axially positioned sectioned tuning rings 140. That is, one or more sectioned tuning ring(s) 110 may be coupled to each axially facing surface 120 (behind rings 100) of flange coupling 102.

In the FIGS. 1-3 embodiments, sectioned tuning ring 100 includes a plurality of substantially planar and arcuate sections 130 positioned circumferentially adjacent one another so as to form a substantially planar ring that sits substantially perpendicular to rotating body 104. In FIG. 1 each arcuate section 130 extends approximately 180°. In FIG. 2, each arcuate section 132 extends approximately 120°.

Where more than one sectioned tuning ring 100 is used, adjacent sectioned tuning rings 100 need not have the same number of sections 132. Practically any number of sections may be employed so long as they form a ring when put together. In one embodiment, as shown best in FIG. 2, although it may not be necessary in all cases, a joint 142 between adjacent sections 132 of a first sectioned tuning ring 144 does not overlap a joint 146 between adjacent sections 147 of an axially adjacent second sectioned tuning ring 148. That is, either adjacent sectioned tuning rings 100 have the same number of joints and their joints are circumferentially offset (i.e., by mounting the rings at different rotational angles about rotating body 104), or the adjacent rings 100 do not include the same number of sections so their joints do not positionally match up. This offset positioning may be helpful in preventing movement of the sections.

As shown in FIG. 3, where more than one sectioned tuning ring 100 is used, the sectioned tuning rings 100 need not have the same diameter or axial extent.

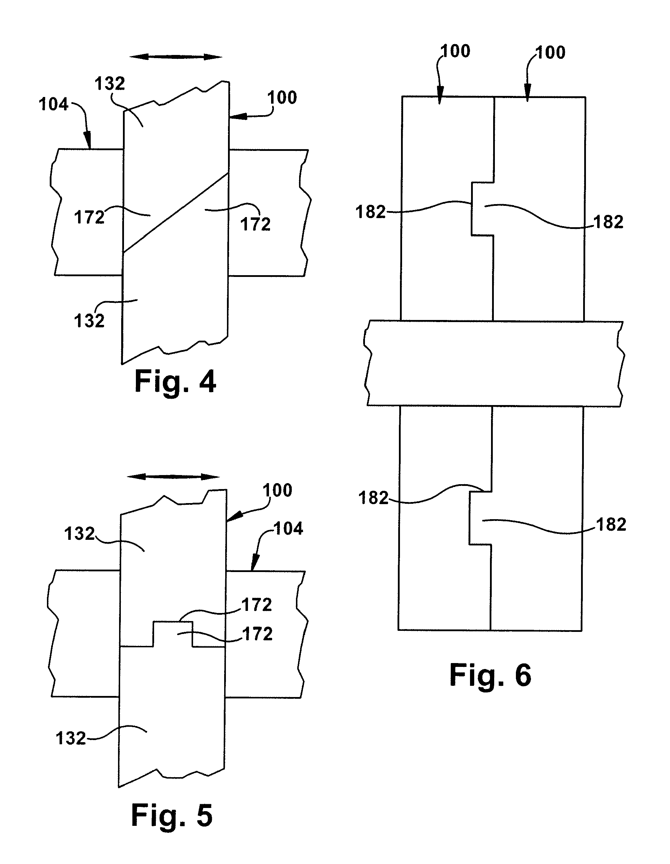

Referring to FIGS. 4-6, each sectioned tuning ring 100 may include mating elements to resist different types of movement. For example, FIGS. 4 and 5 show cross-sectional detail views of mating elements 170, 172 between circumferentially adjacent sections 132 to resist axial movement therebetween, i.e., as shown by double-headed arrows, parallel to rotating body 104. In FIG. 4, mating elements 170, 172 are mating angled surfaces on abutting faces of arcuate sections 132. In FIG. 5, mating elements 170, 172 are tongue and groove type elements. FIG. 6 shows axially adjacent sections 132 of sectioned tuning rings 100 including mating elements 180, 182 that are tongue and groove type elements. In this case, mating elements 180, 182 resist circumferential movement of sectioned tuning rings 100 therebetween, i.e., into and out of the page. It is understood that the mating elements shown are only illustrative and a wide variety of other mating elements or other techniques may be possible to resist movement. In addition, combinations of the above-described embodiments may be employed, e.g., FIG. 4 and FIG. 6 mating elements together.

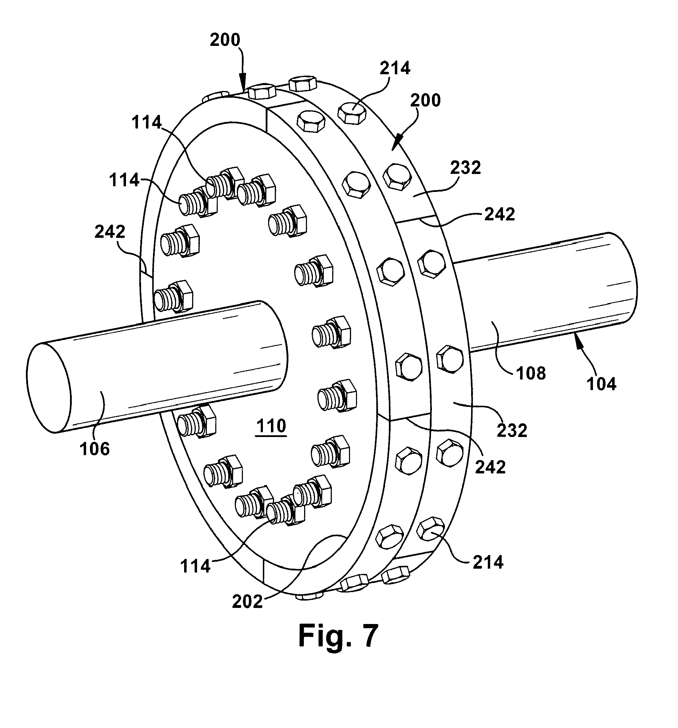

FIG. 7 shows a perspective view of another embodiment of a sectioned tuning ring 200 according to the invention. In this case, sectioned tuning ring 200 is mounted to a circumferential surface 202 of flange coupling 102. Consequently, each section 232 is substantially arcuate and semi-circular. In this case, a plurality of bolts 214 extend radially into flange coupling 102 to mount sectioned tuning ring 200. Any number of sections 232 may be employed. Joints 242 between sections 232 of adjacent sectioned tuning rings 200 may be offset, but this is not necessary. While two sectioned tuning rings 200 have been illustrated, one for each flange 110, 112 (latter now shown), sectioned tuning ring 200 may include a single ring or more than two. In operation, rotating body 104 may be provided in an operational position within a machine, e.g., with any structure coupled thereto near flange coupling 102 removed. Sectioned tuning ring 100 may then be mounted to flange coupling 102 with rotating body 104 in the operating position within a machine to adjust a frequency of the rotating body. Frequency testing may be conducted prior to the mounting to determine a physical characteristic of sectioned tuning ring(s) 100 necessary to properly tune rotating body 104. After mounting of an initial sectioned tuning ring 100, if it is discovered that further tuning is required, at least one physical characteristic of the sectioned tuning ring may be adjusted by replacing a first section 132 with a second section 132 having at least one different physical characteristic. The physical characteristic(s) may include, for example, material, weight, size (e.g., diameter or axial extent), stiffness, inertia, etc. Alternatively, one or more sectioned tuning rings 100 may be modified, added or removed to achieve the necessary tuning.

The change in physical characteristic(s) provided by sectioned tuning ring(s) 100, 200 will affect the torsional frequency of oscillation in rotating body 104. In one example, an operator may be able to adjust sectioned tuning ring(s) 100, 200 such that the torsional frequency of rotating body 104 is substantially the same as the natural frequency of the rotating body torsional mode of interest. Other tuning requirements are also achievable using sectioned tuning ring(s) 100, 200. Another advantage of some embodiments is that when two or more sectioned tuning rings 100, 200 are next to each other, with overlapping ends, the bolts 114 between the overlapping ends are loaded in shear and the rings may become self supporting. In this case, even though two or more sectioned tuning rings 100, 200 may be bolted to an integral flange 110 or 112 of flanged coupling 102, it is not necessary nor does the flange coupling 102 have to be as substantial of a member as conventionally provided to carry the load.

That is, it may only be used to provide axial location.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by the context, (e.g., includes the degree of error associated with measurement of the particular quantity).

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. An apparatus comprising:
a sectioned tuning ring (100) mounted to a flange coupling (102) that couples a first part (106) and a second part (108) of a rotating body (104) together, the sectioned tuning ring (100) adjusting a frequency of the rotating body (104).

2. The apparatus of claim 1, wherein the sectioned tuning ring (100) includes a plurality of arcuate sections (130) positioned circumferentially adjacent one another.

3. The apparatus of claim 1 or 2, wherein the sectioned tuning ring (100) is mounted to an axially facing surface (120) of the flange coupling (102), wherein each section of the sectioned tuning ring (100) is substantially planar and arcuate.

4. The apparatus of claim 3, wherein the sectioned tuning ring (100) includes a plurality of axially positioned sectioned tuning rings (144, 148).

5. The apparatus of claim 4, wherein a joint (142) between adjacent sections of a first sectioned tuning ring (144) does not overlap a joint (146) between adjacent sections (147) of an axially adjacent second sectioned tuning ring (148).

6. The apparatus of claim 4 or 5, wherein each sectioned tuning ring (100) includes at least one of: mating elements (170, 172) between axially adjacent sections to resist circumferential movement therebetween, and mating elements (180, 182) between circumferentially adjacent sections (132) to resist axially movement therebetween.

7. The apparatus of any of claims 3 to 6, wherein the flanged coupling (102) includes a first flange (110) coupled to a second flange (112) by a plurality of bolts (114), and the sectioned tuning ring (100) is mounted to the flange coupling (102) using the plurality of bolts (114).

8. The apparatus of claim 4, wherein the sectioned tuning ring (100) includes a pair of sectioned tuning rings (144, 148), one attached to each axially facing surface of the flange coupling (102).

9. The apparatus of any preceding claim, wherein the rotating body (104) remains in an operating position during mounting of the sectioned tuning ring (100) on the flanged coupling (102).

10. The apparatus of claim 1, wherein the sectioned tuning ring (200) is mounted to a circumferential surface (202) of the flange coupling (102), wherein each section (232) of the sectioned tuning ring (200) is substantially arcuate and semi-circular.

11. A system comprising:
a rotating body (104) including a first part (106) coupled to a second part (108) by a flanged coupling (102) and the apparatus as recited in any of claims 1 to 10.

12. A method comprising:
providing a rotating body (104) including a first part (106) coupled to a second part (108) by a flange coupling (102); and
mounting a sectioned tuning ring (100) to the flange coupling (102) with the rotating body (104) in an operating position within a machine to adjust a frequency of the rotating body (104).

13. The method of claim 12, further comprising adjusting at least one physical characteristic of the sectioned tuning ring (100) by replacing a first section with a second section having at least one different physical characteristic.

14. The method of claim 13, wherein the at least one physical characteristic is selected from the group consisting of: weight, size, stiffness and inertia.

15. The method of any of claims 12 to 14, wherein the sectioned tuning ring (100) includes a plurality of substantially planar arcuate sections (130) positioned circumferentially adjacent one another.

16. The method of any of claims 12 to 14, wherein the sectioned tuning ring (100) includes a plurality of axially positioned sectioned tuning rings (144,148).

17. The method of claim 12, wherein at least one of the axially spaced sectioned tuning rings includes a plurality of arcuate sections positioned circumferentially adjacent one another.
